# FASCICULE DE BREVET EUROPEEN

(11) **EP 0 493 165 B1**
(45) Date de publication et mention de la délivrance du brevet: **20.09.1995**
(21) Numéro de dépôt: 91403338.6
(22) Date de dépôt: 10.12.1991
(51) Int. Cl.: B29C 53/04, B29C 53/84

(54) **Procédé et dispositif pour la déformation à chaud d'une pièce de travail, notamment par pliage**
Verfahren und Vorrichtung zum warmen Verformen eines Werkstückes, insbesondere zum Biegen
Process and apparatus for hot forming of a work piece, especially by bending

(30) Priorité: 21.12.1990 FR 9016090
(43) Date de publication de la demande: 01.07.1992
(73) Titulaire: LA TOLERIE PLASTIQUE, F-76930 Octeville-sur-Mer (FR)
(72) Inventeur: Antoine, Jean-Claude, F-76310 Sainte-Adresse (FR)
(74) Mandataire: Coutel, Jean-Claude

(56) Documents cités:
- EP-A- 0 365 054
- DE-A- 3 034 283
- GB-A- 898 095
- PLASTVERARBEITER vol. 30, no. 1, Janvier 1979, pages 11 - 14; G. MAGER: "Variationsmöglichkeiten beim Abkanten und örtlichen Biegen von thermoplastischem Plattenmaterial'

## Description

La présente invention est relative à la déformation à chaud d'une pièce de travail, notamment par pliage, pour que cette pièce présente une forme définitive différente de la forme initiale. Plus particulièrement, l'invention s'applique à une telle déformation pour des pièces en matière plastique.

Dans ce domaine technique, on a rencontré jusqu'à présent des difficultés de répétitivité et de régularité pour l'obtention de pièces identiques, notamment quant à l'amplitude de la déformation, par exemple les angles de pliage, et à l'aspect final de la matière dans la zone déformée, cet **aspect** dépendant non seulement du degré de déformation de la matière, mais également de la température à laquelle celle-ci est portée. Actuellement, pour effectuer la déformation à chaud d'une pièce, notamment d'une pièce en matière plastique, on réalise un chauffage de la matière dans la zone à déformer, et les caractéristiques de ce chauffage, c'est-à-dire sa durée, la température de la source thermique, la température espérée pour la matière dans sa zone de déformation, la précision du flux de chaleur, ainsi que d'autres paramètres, sont commandés et contrôlés de telle manière que, finalement, on chauffe la pièce pendant une durée prédéterminée, après quoi, éventuellement après avoir écarté la source thermique, on procède à l'opération mécanique de déformation de la pièce à l'aide d'un outil approprié.

Toutefois, on s'est rendu compte que cette durée prédéterminée calculée du temps de chauffage devait être pondérée en fonction de la température ambiante ; c'est pourquoi on a adjoint aux installations connues des sondes thermiques qui captent les variations de la température ambiante et corrigent, éventuellement automatiquement, cette durée de chauffage en la raccourcissant ou en l'allongeant.

Malgré cette précaution, la technique actuelle de déformation thermique d'une pièce,notamment d'une pièce en matière plastique, présente de graves inconvénients qui sont liés au fait que les variations non mesurées de certains paramètres ne sont pas prises en compte, par exemple la température initiale de la pièce à déformer, la température de certains éléments mécaniques coopérant avec la pièce de travail, par exemple le support ou les guides de pièce, ou encore l'outil de déformation, ainsi que la stabilité de la source thermique.

Il en résulte que, même si la durée de chauffage prédéterminée est respectée, il arrive fréquemment que, lors de la phase proprement dite de déformation de la pièce, la zone à déformer ne soit pas à la température requise, soit qu'elle soit à une température trop faible, ce qui risque de provoquer sa dégradation mécanique, voire sa rupture, soit qu'elle soit à une température trop grande, avec pour conséquence,par exemple, sa dégradation thermique par modification de sa structure.

La technique ci-dessus décrite de la déformation d'une pièce de travail par l'application, successivement, d'un traitement thermique, puis d'une contrainte mécanique de déformation de la pièce, est illustrée par exemple par le document EP-A-0 365 054 sur lequel les préambules des revendications indépendantes 1 et 9 sont fondés et dans lequel, pour plier une plaque en matière plastique, on chauffe d'abord celle-ci dans un poste de chauffage, puis on transporte la pièce ainsi chauffée dans un poste de déformation mécanique. Accessoirement, ce document indique qu'on exerce un chauffage différenciel sur les deux faces de la plaque. Selon la technique décrite dans ce document, le chauffage, tant par sa durée que son intensité, doit satisfaire à toutes les conditions exposées précédemment pour que, lorsque la pièce chauffée est transférée dans le poste de déformation mécanique, la matière soit suffisamment ramollie pour se prêter à une telle déformation. Au surplus, dans ce document, il est clair que l'état de ramollissement de la pièce se modifie entre l'instant où le chauffage cesse et l'instant où on applique la contrainte mécanique, ce qui rend encore plus difficile et aléatoire l'obtention d'une plaque pliée correcte.

Suivant une autre technique (GB-A-898 095), on déforme d'abord à force la pièce de travail, éventuellement après un préchauffage, jusqu'à lui donner sa forme finale désirée,puis on la soumet, dans cet état déformé, à un chauffage pour que la déformation initiale soit maintenue. Toutefois, dans cette technique, d'une part, la zone de déformation de la pièce est soumise à des contraintes mécaniques importantes qui risquent de provoquer sa dégradation,voire sa rupture et, d'autre part, les conditions opératoires du traitement thermique sont aussi aléatoires que dans la première technique décrite ci-dessus.

L'invention a pour but de remédier à ces inconvénients en permettant de déformer à chaud une pièce de travail, principalement une pièce en matière plastique, en prenant en compte le fait que, en relation avec l'action mécanique à laquelle elle est soumise, c'est la température effective de la zone de la pièce à déformer qui constitue la condition opératoire principale, quelles que soient les variations possibles des autres conditions opératoires.

A cet effet, la présente invention concerne un procédé qui consiste à exercer sur la pièce de travail, dans la zone à déformer, une pression contrôlée de déformation et, pendant au moins le début de l'application de cette pression, à chauffer de manière contrôlée la pièce de travail, au moins dans la zone à déformer, de sorte que, sous l'effet conjugué de la pression et de la chaleur, la pièce se déforme jusqu'à son état final désiré lorsqu'elle a atteint une température en relation avec la contrainte mécanique de déformation à laquelle elle est soumise.

Ainsi selon l'invention, on ne prend en compte que la température effective de la pièce dans la zone à déformer, en s'affranchissant de tous les paramètres extérieurs qui pourraient influencer cette température, pour effectuer la déformation de la pièce sous l'effet mécanique de la pression exercée.

Suivant un mode de mise en oeuvre préféré, on ne chauffe la pièce que pendant le début de l'application de la pression, jusqu'à ce que la pièce se déforme d'une quantité prédéterminée que l'on détecte, après quoi le chauffage est supprimé. Cette suppression du chauffage peut être nécessaire pour éviter une surchauffe de la pièce pendant le reste de la déformation et/ou pour escamoter les moyens de chauffage hors du trajet de la pièce lorsque celle-ci se déforme.

Pendant tout le processus, la pression appliquée peut soit être sensiblement constante, soit être variable, la valeur de la pression après l'amorce de la déformation étant supérieure ou inférieure à la valeur avant cette amorce de déformation.

Suivant un mode de mise en oeuvre préféré du procédé selon l'invention, on chauffe la pièce sur une face et on applique la pression de déformation sur l'autre face.Mais on pourrait également chauffer la pièce sur ses deux faces.

Le procédé ci-dessus peut être appliqué à une pièce qui est initialement à la température ambiante ou qui a été préchauffée.

Si le chauffage est supprimé avant la fin de la déformation, cette suppression est pratiquement sans effet sur la température de la pièce dans la zone à déformer du fait que la fin de la déformation finale s'effectue en général très rapidement.

L'invention concerne également un dispositif pour la mise en oeuvre du procédé ci-dessus, ce dispositif étant caractérisé par le fait qu'il comporte : un support pour la pièce à déformer ; des moyens pour appliquer une pression sur ladite pièce dans la zone à déformer ; et des moyens de chauffage de la pièce dans la zone à déformer au moins pendant le début de l'application de cette pression.

De préférence, on fait également comporter à ce dispositif des moyens pour détecter le début de la déformation de la pièce et pour commander la fin du chauffage lorsque ce début de déformation est détecté.

La déformation de la pièce peut être réalisée à l'aide d'un élément d'appui qui est en contact avec celle-ci et sur lequel s'exerce la pression de travail.

On comprendra bien l'invention à l'aide du complément de description qui va suivre d'un mode de réalisation préféré non limitatif pour la mise en oeuvre du procédé, en référence au dessin annexé qui fait partie de la description et dans lequel :
Fig. 1 est une vue en élévation verticale, partiellement en coupe, d'un dispositif pour le pliage à chaud d'une pièce en matière plastique, dans la phase initiale du procédé lors de laquelle on procède au chauffage de la pièce à travailler ;
Fig. 2 est une vue analogue à la Fig. 1, la pièce s'étant déformée d'un degré prédéterminé par l'effet conjugué de la chaleur et de la pression primaire ; et
Fig. 3 est une vue analogue aux Figs. 1 et 2, la pièce étant cette fois complètement déformée.

La description qui va suivre sera faite en référence à la déformation par pliage d'une pièce plane en matière plastique ; toutefois, il ne s'agit là que d'un exemple d'application de l'invention qui n'est pas limitatif, la déformation pouvant se faire autrement que par pliage,par exemple par cambrage ou ondulation, et la pièce de travail pouvant présenter une autre forme initiale ou être en une autre matière.

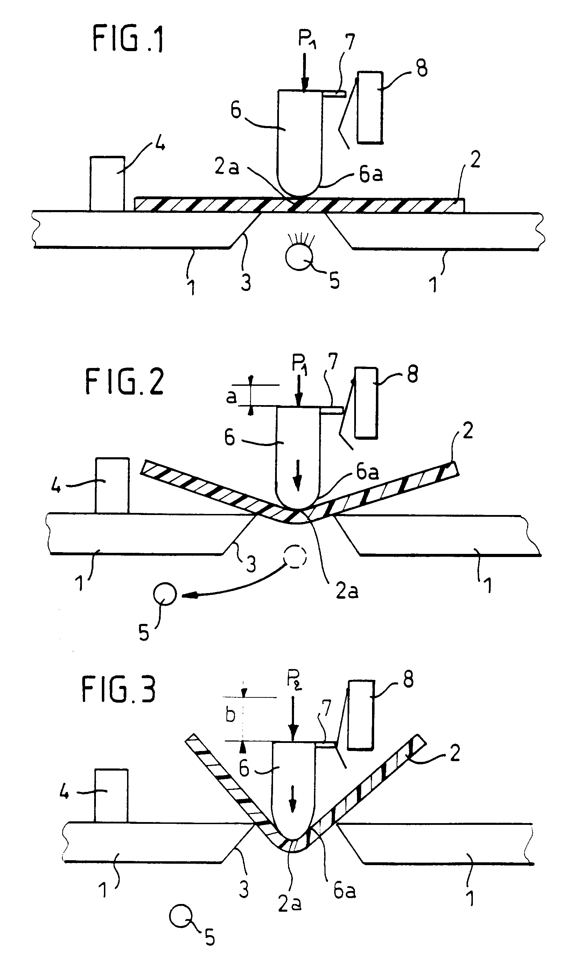

Dans l'exemple représenté à titre illustratif, le dispositif comporte une table 1 pour supporter, sur sa face supérieure, une plaque 2 en matière plastique qui repose librement sur la table. Dans la zone de pliage, la table 1 présente une fente 3 à l'intérieur de laquelle, comme montré sur les Figs. 2 et 3, viendra se loger l'arête de pliage lors de la déformation. Le dispositif comporte également d'autres éléments mécaniques statiques, schématisés en 4, par exemple des butées, des guides ou des moyens d'amenée successive des plaques 2.

Pour la mise en oeuvre du procédé selon l'invention, la pièce 2 , dans sa zone 2a à déformer, est soumise initialement et simultanément à un chauffage et à une pression P1 dans le sens de la déformation à obtenir finalement. Le chauffage est réalisé de toute manière appropriée, par au moins un élément chauffant 5, ce chauffage étant par exemple du type électrique ou à projection d'un flux d'air chaud. Avantageusement, l'élément chauffant 5 est situé dans la fente 3 , à une distance appropriée de la pièce 2, et du côté de la face de celle-ci qui, lors de la déformation complète, subira le plus grand allongement. Quant à la **pression** P1, elle est exercée à l'aide d'un élément ou outil d'appui 6**,** qui est en contact avec l'autre face de la pièce 2 et dont l'extrémité inférieure active 6a présente une forme étudiée du fait que**,** à la fin de la déformation (Fig. 3)**,** elle présente une grande surface de contact avec la pièce 2. La **pression** P1 exercée par l'élément 6 sur la pièce 2 est obtenue, de manière précise et constante, par tout système approprié (non représenté), par exemple un système hydraulique, mécanique ou pneumatique dont les caractéristiques de stabilité quantitative sont indiscutables.

Ainsi, lors de la première phase opératoire du procédé selon l'invention, la pièce 2 est soumise à l'effet conjugué du chauffage par l'élément 5 et de la pression P1 par l'élément 6, dans le sens de la déformation finale à obtenir.

Avantageusement, on détecte le début ou amorce de la déformation de la pièce 2, dû à l'effet conjugué ci-dessus, et on effectue la déformation complète, de plus grande amplitude, de la pièce, en supprimant le chauffage.

On a schématiquement représenté sur le dessin des moyens détecteurs permettant de détecter ce début de déformation. Dans cet exemple, l'élément d'appui 6 porte un doigt en saillie 7 qui, lors du déplacement vertical de l'élément 6, vient coopérer avec un microcontact 8 pour le faire changer d'état lorsque l'élément 6 s'est déplacé d'une distance prédéterminée a correspondant du début de déformation choisi de la pièce 2. La Fig. 2 illustre l'instant du procédé selon l'invention auquel cette valeur de déformation est atteinte. A cet instant, le microcontact 8 change d'état, et l'élément chauffant 5 est escamoté,et éventuellement mis au repos.

L'élément d'appui 6 est soumis à une pression P2, pour déformer complètement la pièce 2 et lui donner sa forme définitive, comme montré à la Fig. 3. En fin de processus, l'élément d'appui 6 s'est déplacé verticalement d'une distance b par rapport à sa position initiale de la Fig. 1, et la pièce 2 a atteint sa forme finale. De façon connue, selon le cas, l'élément d'appui 6 peut rester dans sa position de la Fig. 3, jusqu'à un refroidissement approprié de la pièce 2, ou être remonté immédiatement après sa fin de course de descente. La position de fin de course de l'élément d'appui 6 est définie par exemple par une butée (non représentée).

Dans l'exemple ci-dessus de mise en oeuvre du procédé et de réalisation du dispositif selon l'invention, le chauffage et la pression sont appliqués simultanément ; toutefois, il est possible de réaliser un préchauffage de la pièce à travailler ; en outre, la pression P2 est en général égale à la pression P1, toutefois, il n'est pas à exclure que ces deux pressions puissent être différentes, la pression P2 étant alors supérieure ou inférieure à la pression P1.

La pression qui est exercée sur la pièce de travail, ainsi que la température à laquelle celle-ci est portée dans sa zone de déformation, dépendent de plusieurs paramètres et sont déterminées cas par cas, en fonction notamment de la nature de la pièce, de ses caractéristiques géométriques initiales, et du type et de l'amplitude de la déformation à effectuer.

Pour des matières plastiques, qui constituent l'application préférée mais non limitative de l'invention, les températures de la pièce de travail, dans sa zone de déformation, peuvent aller de 50° C à 300° C et la pression appliquée peut aller de 0,2 bar à 6 bars.

Suivant un exemple pratique effectivement mis en oeuvre, on a utilisé une plaque de polystyrène choc d'une longueur de 700 mm, on lui a fait comporter une rainure de pliage sur sa face interne et on l'a pliée à 90°. On a chauffé la plaque dans la zone de travail de manière à obtenir une température d'environ 100° C et on a appliqué sur l'outil de déformation, qui se déplaçait verticalement vers le bas, une pression de 3 bars, cet outil pesant environ 15 kg.

Il ressort de la description ci-dessus du procédé et du dispositif selon l'invention, à l'aide d'un exemple, que l'on s'affranchit totalement des paramètres difficilement contrôlables pour ne s'intéresser qu'au paramètre principal de la déformation de la pièce, à savoir sa capacité à se déformer sans dégradation, de manière répétitive et précise lorsqu'elle a atteint une température qui, en relation avec la pression appliquée et sans être prédéterminée ou calculée, confère à la matière à déformer une plasticité suffisante pour que, sous une pression donnée, elle se déforme de manière appropriée.

Ainsi, avec l'invention, on obtient une excellente stabilité des pièces dans une même série, on peut passer d'une matière à une autre ou d'une épaisseur à une autre sans changement de réglages, la pièce est chauffée et déformée à sa conformation finale sans qu'elle doive être déplacée, on réduit grandement le coût des systèmes de contrôle, et on peut facilement adapter la technique ci-dessus à des machines existantes.

## Revendications

1. Procédé pour la déformation à chaud d'une pièce de travail (2), notamment par pliage d'une pièce en matière plastique, caractérisé par le fait qu'il consiste à exercer sur la pièce de travail, dans la zone à déformer (2a), une pression contrôlée de déformation et, pendant au moins le début de l'application de cette pression, à chauffer de manière contrôlée la pièce de travail, au moins dans la zone à déformer, de sorte que, sous l'effet conjugué de la pression et de la chaleur, la pièce se déforme jusqu'à son état final désiré lorsqu'elle a atteint une température en relation avec la contrainte mécanique de déformation à laquelle elle est soumise.

2. Procédé selon la revendication 1, caractérisé par le fait que la pièce (2) n'est chauffée que pendant le début de l'application de la pression, jusqu'à ce que la pièce se déforme d'une quantité prédéterminée détectée, après quoi le chauffage est supprimé.

3. Procédé selon la revendication 2, caractérisé par le fait que le chauffage est supprimé par escamotage d'un élément chauffant (5).

4. Procédé selon l'une des revendications 1 à 3, caractérisé par le fait que la pression de déformation est sensiblement constante pendant toute la déformation de la pièce.

5. Procédé selon l'une des revendications 1 à 3, caractérisé par le fait que la pression est variable, sa valeur après l'amorce de déformation étant supérieure ou inférieure à sa valeur avant l'amorce de déformation.

6. Procédé selon l'une des revendications 1 à 5, caractérisé par le fait qu'on chauffe la pièce sur une face et qu'on applique la pression de déformation sur l'autre face.

7. Procédé selon l'une des revendications 1 à 5, caractérisé par le fait que le chauffage est exercé sur les deux faces de la pièce.

8. Procédé selon l'une des revendications 1 à 7, caractérisé par le fait que la pièce est soumise à un préchauffage avant l'application de la pression.

9. Dispositif pour la mise en oeuvre du procédé selon l'une des revendications 1 à 8, caractérisé par le fait qu'il comporte : un support (1) pour la pièce (2) à déformer ; des moyens pour appliquer une pression sur ladite pièce (2) dans la zone à déformer (2a) ; et des moyens (5) de chauffage de la pièce (2) dans la zone à déformer (2a) au moins pendant le début de l'application de la pression.

10. Dispositif selon la revendication 9, caractérisé par le fait qu'il comporte des moyens (7,8) pour détecter le début de la déformation de la pièce et pour commander la fin du chauffage lorsque ce début de déformation est détecté.

11. Dispositif selon l'une des revendications 9 et 10, caractérisé par le fait qu'il comporte un élément d'appui (6) qui est en contact avec la pièce de travail (2) et sur lequel s'exerce la pression de déformation.

## Claims

1. Method for the hot deformation of a work piece (2), in particular by folding a work piece of plastics material, characterized by the fact that it comprises exerting on the work piece, in the zone (2a) to be deformed, a controlled deforming pressure and, during at least the beginning of the application of this pressure, heating the work piece in a controlled manner, at least in the zone to be deformed, whereby, under the combined effect of the pressure and of the heat, the work piece is deformed till its desired final state when it has reached a temperature in relation to the mechanical deformation stress to which it is subjected.

2. Method according to claim 1, characterized by the fact that the piece (2) is heated only during the beginning of the application of the pressure until the work piece is deformed by a detected predetermined amount, after which the heating is stopped.

3. Method according to claim 2, characterized by the fact that the heating is stopped with withdrawal of a heating element (5).

4. Method according to one of claims 1 to 3, characterized by the fact that the deformation pressure is substantially constant during all the deformation of the piece.

5. Method according to one of claims 1 to 3, characterized by the fact the pressure is variable, its value after the start of the deformation being higher or lower than its value before the start of the deformation.

6. Method according to one of claims 1 to 5, characterized by the fact that the piece is heated on one face and the deformation pressure is applied on the other face.

7. Method according to one of claims 1 to 5, characterized by the fact that the heating is exerted on both faces of the piece.

8. Method according to one of claims 1 to 7, characterized by the fact that the piece is subjected to a preheating before the application of the pressure.

9. Device for carrying out the method according to one of claims 1 to 8, characterized by the fact that it comprises : a support (1) for the piece (2) to be deformed ; means for applying a pressure on said piece (2) in the zone (2a) to be deformed ; and means (5) for heating the piece (2) in the zone (2a) to be deformed during at least the beginning of the application of the pressure.

10. Device according to claim 9, characterized by the fact that it comprises means (7, 8) for detecting the start of the deformation of the piece and for controlling the stoppage of the heating when this start of the deformation is detected.

11. Device according to one of claims 12 and 13, characterized by the fact that it comprises a thrust element (6) which is in contact with the work piece (2) and on which the deformation pressure is applied.

## Patentansprüche

1. Verfahren zum warmen Verformen eines Werkstücks (2), insbesondere durch Biegen eines Teils aus Plastikmaterial, **dadurch gekennzeichnet**, daß man auf das Werkstück in der zu verformenden Zone (2a) einen gesteuerten Verformungsdruck ausübt und wenigstens während des Beginns dieser Druckanwendung das Werkstück kontrolliert wenigstens in der zu verformenden Zone erwärmt, sodaß unter dem verbundenen Einfluß von Druck und Wärme sich das Werkstück bis in seinen gewünschten Endzustand verformt, wenn es eine Temperatur erreicht hat, die mit der mechanischen Verformungsspannung, der es unterworfen ist, in Beziehung steht.

2. Verfahren nach Anspruch 1, dadurch gekennzeichnet, daß das Werkstück (2) nur während des Beginns der Druckanwendung erwärmt wird, bis sich das Werkstück um ein vorbestimmtes abgefühltes Ausmaß verformt hat, woraufhin die Erwärmung abgebrochen wird.

3. Verfahren nach Anspruch 2, dadurch gekennzeichnet, daß die Erwärmung durch Abdecken eines Heizelements (5) abgebrochen wird.

4. Verfahren nach einem der Ansprüche 1 bis 3, dadurch gekennzeichnet, daß der Verformungsdruck während der gesamten Verformung des Werkstücks im wesentlichen konstant ist.

5. Verfahren nach einem der Ansprüche 1 bis 3, dadurch gekennzeichnet, daß der Druck variabel ist, wobei seine Größe nach dem Beginn der Verformung größer oder kleiner als seine Größe vor dem Beginn der Verformung ist.

6. Verfahren nach einem der Ansprüche 1 bis 5, dadurch gekennzeichnet, daß man das Werkstück auf der einen Seite erwärmt und man den Verformungsdruck auf die andere Seite aufbringt.

7. Verfahren nach einem der Ansprüche 1 bis 5, dadurch gekennzeichnet, daß man beide Seiten des Werkstücks erwärmt.

8. Verfahren nach einem der Ansprüche 1 bis 7, dadurch gekennzeichnet, daß das Werkstück vor der Druckanwendung einer Vorerwärmung unterzogen wird.

9. Vorrichtung zur Ausführung des Verfahrens nach einem der Ansprüche 1 bis 8, dadurch gekennzeichnet, daß sie enthält: einen Träger (1) für das zu verformende Werkstück (2); Einrichtungen zur Einwirkung eines Drucks auf das Werkstück (2) in der zu verformenden Zone (2a); Einrichtungen (5) zur Erwärmung des Werkstücks (2) in der zu verformenden Zone (2a) wenigstens zu Beginn der Druckaufbringung.

10. Vorrichtung nach Anspruch 9, dadurch gekennzeichnet, daß sie Einrichtungen (7,8) zur Ermittlung des Verformungsbeginns des Werkstücks und zum Beeinflussen des Erwärmungsendes, wenn der Verformungsbeginn ermittelt wird, aufweist.

11. Vorrichtung nach einem der Ansprüche 9 und 10, dadurch gekennzeichnet, daß sie einen Stempel enthält, der mit dem Werkstück (2) in Berührung ist und auf den der Verformungsdruck einwirkt.
